# EUROPEAN PATENT SPECIFICATION

(11) **EP 1 413 205 B1**
(45) Date of publication and mention of the grant of the patent: **04.10.2006**
(21) Application number: 02023794.7
(22) Date of filing: 25.10.2002
(51) Int. Cl.: A23G 1/20

(54) **Injection molding of fat-containing confectionery mass**
Spritzgiessen von fetthaltigen Süsswaren
Moulage par injection de confiseries grasses

(43) Date of publication of application: 28.04.2004
(73) Proprietor: Kraft Foods R & D, Inc. Zweigniederlassung München, 81737 München (DE)
(72) Inventor: Lenoel, Sonia, 80797 Munich (DE); Rocklage, Bernard, Dr., 85614 Kirchseeon (DE); Stulac, Mirjana, 80939 Munich (DE)
(74) Representative: Morf, Jan Stefan

(56) References cited:
- EP-A- 0 603 467
- EP-A- 0 730 827
- EP-A- 0 923 876
- EP-A- 1 149 536
- WO-A-94/12046
- GB-A- 1 527 240
- GB-A- 2 306 289
- RU-C- 2 187 940
- US-A1- 2001 028 909

## Description

### Field of Invention

The invention relates to a process for preparing fat-containing confectionery material, including chocolate tablets, in which liquid fat-containing material is tempered, injected between two separable mold surfaces defining a closed cavity and finally cooled.

### State of the Art

The conventional process of chocolate production consists of the following steps: production of chocolate mass by mixing the ingredients, followed by conching of the chocolate mass, tempering of the chocolate mass, pouring the chocolate mass into an open mold and cooling the chocolate mass in the mold. Afterwards the chocolate is demolded, wrapped and stored for the final crystallization. The disadvantage of the process is that a chocolate tablet with only one shiny side results - with a shiny surface and a dull and flat bottom. The dull and flat bottom of the tablet will be visible by opening the product package and is particularly attractive for the consumers.

EP 0 720 430 discloses a method for "Injection Molding of Confectionery" which relates to the production of fat-containing products, especially chocolate products, in which a molten fat-containing mass is introduced into a mold to provide shaped solids. Solid fat-containing products are prepared by molding between two separable and different mold surfaces, having different temperatures and thermal conductivities, which define a closed cavity. Both mold surfaces can be cooled down to a temperature range of -40° to 0°C. The fat-containing mass has a temperature range from 28° to 55°C and a fat content of at least 25%, preferably to 60%. The invention is particularly applicable to products which are relatively thin. These products are normally called shells. The resultant products, particularly if they are in shell form, may be available for filling with a suitable edible composition, in particular frozen confections, e.g. sorbets, yogurts, water ices and ice cream.

The disadvantages of this process are the use of a non-tempered chocolate that does not lead to shiny surfaces, and that the two surfaces are not subjected to the same conditions, so will not have the same characteristics. The aim of the present invention is to provide a process for the production of fat-containing confectionery products, preferably chocolate tablets, with a shiny surface and a shiny bottom to attract consumers while they are opening the product package. Both sides can have a certain shape, the same shape or different shapes.

### Summary of the Invention

The invention relates to a process for preparing fat - containing confectionery material by injection between,two separable mold surfaces defining a closed cavity, which comprises:
- tempering fat-containing confectionery,
- introducing the fat-containing confectionery at a temperature in the range of 25° to 34°C under a pressure gauge of 1 to 100 bars into a cavity between separable molds surfaces, having a temperature in the range of 5°C higher to 5°C lower than the temperature of the fat-containing mass,
- keeping the fat-containing confectionery in contact with the mold and cooling of the mold until the surface of the fat-containing confectionery has reached a temperature of about 17°C or less, and
- separating the mold surface and removing the fat-containing confectionery,
wherein both mold parts are made from the same material and both mold surfaces have the same temperature during the injection molding and cooling steps.

### A Detailed Description of the Invention

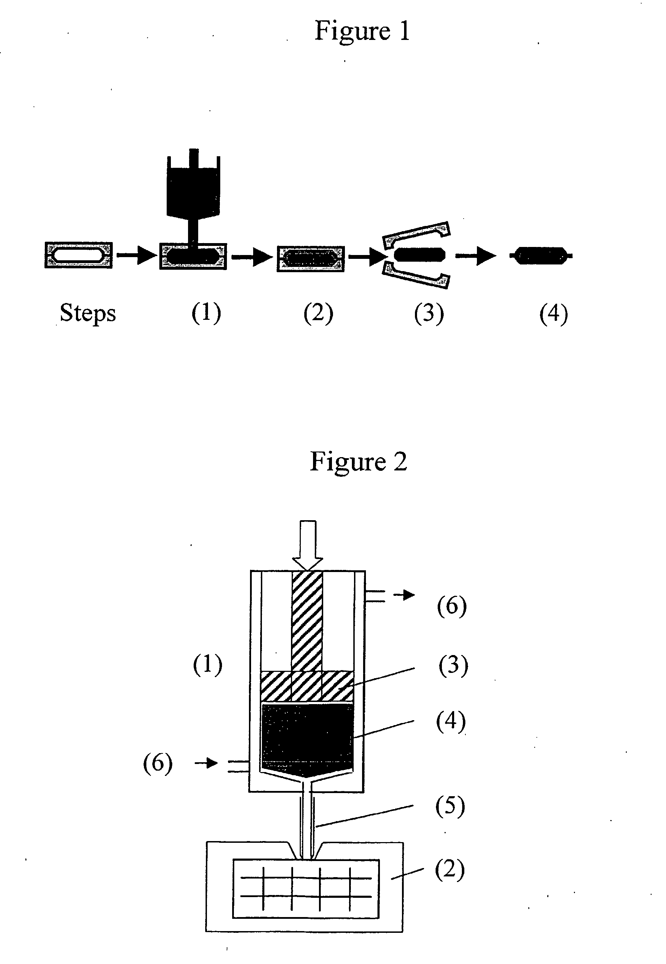

Figure 1 describes the various steps of the injection molding process. In step 1 the fat-containing confectionery mass will be injected into the empty and tempered mould (empty can mean that the mold is filled with air or vacuumed. If the empty mold contains air, the design of the mold must include air vents). In step 2 the fat-containing confectionery mass is cooled. This cooling step is carried out by contact cooling and/ or convection cooling. In step 3 the fat-containing confectionery mass is finally demolded. In step 4 the product can be wrapped and the crystallization process is finalized.

Figure 2 is a more detailed illustration of the injection molding step. The fat-containing confectionery mass (4), which has been previously tempered in a tempering machine, then optionally pre-cooled, is pressed by a piston (3) through the nozzle of die (5) into the closed tempered chocolate/confectionery mold (2). In order to set the optimal injection molding temperature of various fat-containing confectionery masses the sidewalls of the tank (1) are tempered by means of a tempering agent (6).

The present invention provides a process for injection molding of a tempered liquid or semi-liquid chocolate, or any type of fat-containing confectionery. The viscosity of the fat-containing confectionery mass should not be too high in order to allow injection molding. The fat-containing confectionery, having a dough-like consistency with the capability to flow, is injected under pressure at a temperature in the range of 25° to 34°C into a closed mold having a temperature of 5°C higher to 5°C lower than the fat-containing mass. The closed mold was previously evacuated or has air valves. The injection mold consists of two separable mold surfaces defining a closed cavity.

It is important that the fat-containing confectionery mass is tempered in a tempering machine before the injection molding step. This is one of the conditions for obtaining a good gloss.

The tempering treatment is explained as follows. The tempering consists of a cooling step and a heating step of the confectionery/chocolate mass. The tempering steps are essential for the shiny surface and bottom of the chocolate.

In the cooling step in the tempering machine, various types of crystal seeds are formed, and in the heating step the crystal seeds having unfavorable modifications are remelted.

The confectionery/chocolate mass coming from the conches and having a temperature of 40° to 50°C is adjusted for a short period of time to about 45°C and then cooled down and kept at a temperature of 24° to 29°C, depending on the type and the composition of the confectionery/chocolate. Indeed, for milk chocolate, the range is from 25° to 28°C, whereas for dark chocolate the range is 26° to 29°C. And for white chocolate the range is 24° to 26°C. The residence time of the chocolate is on average 1 min at said temperatures, depending on the type of the chocolate. During this period, the chocolate is subjected to shearing forces in order to prevent the crystals from growing too large.

The chocolate is then reheated again, in order to remelt the unstable crystals. There as well, the temperature ranges depend on the type of chocolate. For milk chocolate the range is from 28° to 32°C. For dark chocolate, the temperatures are from 29° to 33°C. And for white chocolate, the range is 26° to 30°C.

The mold temperature is also relevant for the crystallization of the fat-containing confectionery mass. The temperature of the mold should be between 5°C higher or lower than the temperatures of the injected chocolate, preferably around the same temperature to 4°C higher. This temperature concerns the part of the mold that is in contact with the chocolate. In the case of the mold that consists of a composite material, it concerns the interior part, and not the exterior metal part. The mold consists preferably of plastic or metal or a combination thereof.

As the temperature of the mold depends on the temperature of the chocolate, the temperature range depends on the type of chocolate used. For dark chocolate, the range of the temperature of the mold would be 20° to 38°C, for milk chocolate 20° to 37°C and for white chocolate 19° to 35°C. Preferably both mold parts shall have the same temperature as long as the fat-containing mass remains in the mould.

Cooling of chocolate is done either by contact cooling wherein the side walls of the mould are cooled with cooling agent, or by convection cooling wherein the moulds will be cooled by passing through a cooling tunnel or a refrigerator. A combination of both is also possible. After a sufficient time for the fat-containing confectionery/chocolate mass to solidify completely and to reach a temperature of 17°C or less (by means of a cooling device), the two mold surfaces are separated and the product is removed from the molds. The product is wrapped and stored at about 14°C to 18°C for final crystallization of the fat-containing confectionery mass.

The resulting fat-containing confectionery, which can have the form of a tablet or any other form, can be easily removed from the mould. The product can have the same pattern and surface characteristics of the upper and lower side. Also a product with different pattern and surface characteristics can be produced, depending on the used molds. Both tablet sides have a shiny appearance, so that consumers will always see an attractive shiny surface of the product when they open the product package.

The following example illustrates the process according to the invention and is not limiting.

### Example

The milk chocolate mass coming from mass production and having a temperature of about 40° to 50°C, is subjected to tempering. In the tempering process, the chocolate mass is first adjusted to 45°C, then cooled progressively to 28°C for 2 to 3 minutes, then reheated again to 31°C for 1 minute to melt all the crystals except the stable β-crystals. The tempering process takes around 10 minutes.

The tempered chocolate is then subjected to super cooling in a scraped surface heat exchanger down to 26°C. The chocolate having a dough-like consistency is injected into plastic molds (surface temperature 30°C) under pressure (2 bars), then passed through a cooling tunnel at 10°C for 30 minutes until it solidifies and reaches a surface temperature of about 17°C. The mold surfaces are finally separated and the chocolate tablet is removed. The obtained tablet is glossy and shaped on both sides, packed and stored at about 16-18°C for final crystallization.

## Claims

1. A process for preparing fat-containing confectionery material by injection of a fat-containing mass between two separable mold surfaces defining a closed cavity, which comprises:
• tempering fat-containing confectionery,
• introducing the fat - containing confectionery at a temperature in the range of 25° to 34°C under a pressure gauge of 1 to 100 bars into a cavity between separable mold surfaces having a temperature in the range of 5°C higher to 5°C lower than the temperature of the fat-containing mass,
• keeping the fat-containing confectionery in contact with the mold and cooling of the mold until the surface of the fat-containing confectionery has reached a temperature of about 17°C or less, and
• separating the mold surface and removing the fat-containing confectionery,
wherein both mold parts are made from the same material and both mold surfaces have the same temperature during the injection molding and cooling steps.

2. A process according to claim 1, wherein the removed fat-containing mass is held to 14°C to 18°C by a conventional cooling device.

3. A process according to any of the preceding claims wherein the fat-containing mass is tempered within a temperature range of 24° to 29°C, and then reheated to 26° to 33°C to remelt unstable crystals.

4. A process according to claim 3, wherein the milk-containing confectionery mass is tempered within a temperature range of 25° to 28°C and then reheated to 28° to 32°C to remelt unstable crystals.

5. A process according to claim 3, wherein the dark confectionary mass is tempered within a temperature range of 26° to 29°C and then reheated to 29° to 33°C to remelt unstable crystals.

6. A process according to claim 3, wherein the white confectionery mass is tempered within a temperature range of 24° to 26°C, and then reheated to 26° to 30°C to remelt unstable crystals.

7. A process according to any of the preceding claims,
wherein the mold parts are made from plastic or metal or a combination thereof.

8. A process according to any of the preceding claims,
wherein the mold surface temperature ranges from -40° and +10°C during the cooling steps.

## Patentansprüche

1. Ein Verfahren zur Herstellung von fetthaltigem Konfektmaterial durch Spritzen einer fetthaltigen Masse zwischen zwei trennbare Formoberflächen, die einen geschlossenen Hohlraum umgrenzen, das umfasst:
• Tempern von fetthaltiger Konfektmasse,
• Einfüllen der fetthaltigen Konfektmasse bei einer Temperatur im Bereich von 25°C bis 34°C unter einem Manometerdruck von 1 bis 100 Bar in einen Hohlraum zwischen trennbaren Formoberflächen mit einer Temperatur im Bereich von 5°C höher bis 5°C niedriger als die Temperatur der fetthaltigen Masse,
• Aufrechterhalten des Kontakts der fetthaltigen Konfektmasse mit der Form und Abkühlen der Form, bis die Oberfläche der fetthaltigen Konfektmasse eine Temperatur von etwa 17°C oder weniger erreicht hat, und
• Trennen der Formoberflächen und Entfernen der fetthaltigen Konfektmasse,
wobei beide Formteile aus demselben Material bestehen und beide Formoberflächen während der Spritzguss- und Abkühlschritte die gleiche Temperatur besitzen.

2. Ein Verfahren gemäß Anspruch 1, wobei die entnommene fetthaltige Masse mittels einer herkömmlichen Kühleinrichtung bei 14°C bis 18°C gehalten wird.

3. Ein Verfahren gemäß irgendeinem der vorhergehenden Ansprüche, wobei die fetthaltige Masse innerhalb eines Temperaturbereichs von 24°C bis 29°C getempert und anschließend wieder auf 26°C bis 33°C erwärmt wird, um instabile Kristalle wieder zu schmelzen.

4. Ein Verfahren gemäß Anspruch 3, wobei die milchhaltige Konfektmasse innerhalb eines Temperaturbereichs von 25°C bis 28°C getempert und anschließend wieder auf 28°C bis 32°C erwärmt wird, um instabile Kristalle wieder zu schmelzen.

5. Ein Verfahren gemäß Anspruch 3, wobei die dunkle Konfektmasse innerhalb eines Temperaturbereichs von 26°C bis 29°C getempert und anschließend wieder auf 29°C bis 33°C erwärmt wird, um instabile Kristalle wieder zu schmelzen.

6. Ein Verfahren gemäß Anspruch 3, wobei die weiße Konfektmasse innerhalb eines Temperaturbereichs von 24°C bis 26°C getempert und anschließend wieder auf 26°C bis 30°C erwärmt wird, um instabile Kristalle wieder zu schmelzen.

7. Ein Verfahren gemäß irgendeinem der vorhergehenden Ansprüche, wobei die Formteile aus Kunststoff oder Metall oder einer Kombination davon bestehen.

8. Ein Verfahren gemäß irgendeinem der vorhergehenden Ansprüche, wobei die Formoberflächentemperatur während der Abkühlschritte von -40°C bis +10°C reicht.

## Revendications

1. Procédé de préparation d'une substance de confiserie contenant une matière grasse par injection et une masse contenant de la matière grasse entre deux surfaces de moule séparables définissant une cavité fermée, qui comprend :
• le tempérage de la confiserie contenant la matière grasse,
• l'introduction de confiserie contenant la matière grasse à une température dans la plage de 25° à 34 °C sous une pression de manomètre de 1 à 100 bars dans une cavité entre les surfaces de moule séparables ayant une température dans la plage de 5 °C de plus à 5 °C de moins que la température de la masse contenant la matière grasse,
• le maintien de la confiserie contenant la matière grasse en contact avec le moule et le refroidissement du moule jusqu'à ce que la surface de la confiserie contenant la matière grasse ait atteint une température d'environ 17 °C ou moins, et
• la séparation de la surface de moule et le retrait de la confiserie contenant la matière grasse,
dans lequel les deux parties de moule sont faits du même matériau et les deux surfaces du moule ont la même température pendant les étapes de moulage par injection et de refroidissement.

2. Procédé selon la revendication 1, dans lequel la masse contenant la matière grasse retirée est maintenue de 14 °C à 18 °C par un dispositif de refroidissement classique.

3. Procédé selon l'une quelconque des revendications précédentes dans lequel la masse contenant la matière grasse est tempérée dans une plage de température de 24° à 29 °C, et ensuite rechauffée à 26° à 33 °C pour refondre les cristaux instables.

4. Procédé selon la revendication 3, dans lequel la masse de confiserie au lait est tempérée dans une plage de température de 25° à 28 °C puis réchauffée de 28° à 32 °C pour refondre les cristaux instables.

5. Procédé selon la revendication 3, dans lequel la masse de confiserie noire est tempérée dans une plage de température de 26° à 29 °C et ensuite rechauffée à 29° à 33 °C pour refondre les cristaux instables.

6. Procédé selon la revendication 3, dans lequel la masse de confiserie blanche est tempérée dans une plage de température de 24° à 26 °C, et ensuite rechauffée à 26° à 30 °C pour refondre les cristaux instables.

7. Procédé selon l'une quelconque des revendications précédentes, dans lequel les parties de moule sont réalisées à partir d'une matière plastique ou d'un métal ou bien d'une combinaison de ceux-ci.

8. Procédé selon l'une quelconque des revendications précédentes, dans lequel la température de la surface du moule varie de -40° à +10 °C pendant les étapes de refroidissement.
